# EUROPEAN PATENT APPLICATION

(11) **EP 4 145 577 A1**
(43) Date of publication of application: **08.03.2023**
(21) Application number: 21796209.1
(22) Date of filing: 20.04.2021
(51) Int. Cl.: H01M 10/0525

(54) **ACRYLATE, ELECTROLYTE RAW MATERIAL COMPOSITION CONTAINING ACRYLATE, ELECTROLYTE, AND USE THEREOF**

(30) Priority: 28.04.2020 CN 202010349724
(71) Applicant: Farasis Energy (Zhenjiang) Co., Ltd., Jiangsu 212132 (CN); Farasis Energy (Ganzhou) Co., Ltd., Ganzhou, Jiangxi 341000 (CN)
(72) Inventor: LIAO, Shuailing, Zhejiang 341000 (CN); CHEN, Hu, Ganzhou Jiangxi 341000 (CN); XIONG, Dejun, Ganzhou Jiangxi 341000 (CN); LV, Jiabin, Ganzhou Jiangxi 341000 (CN); LIAO, Peng, Ganzhou Jiangxi 341000 (CN)
(74) Representative: Lavoix
(86) International application number: PCT/CN2021/088340
(87) International publication number: WO 2021/218704

(57) **Abstract**

Provided are an acrylate, and a gel electrolyte raw material composition containing the acrylate for a lithium ion secondary battery. The acrylate is any one or more of the compounds as represented by formulae I) and II) below: wherein, in formulae I) and II), R₁ and R₂ each comprise 0-6 carbon atoms, and preferably each of same is any one of H, CH₃, C₂H₅, C₃H₇, C₄H₉, C₆H₅, CF₃, CF₃CH₂, CF₂HCH₂, CF₃CF₂, CF₂HCF₂CH₂, OCH₂CF₃, III) and IV). Also provided are a gel electrolyte raw material composition containing the acrylate for a lithium ion secondary battery, and a gel electrolyte. The gel electrolyte can greatly improve the safety and durability of a lithium ion battery.

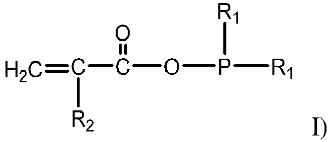

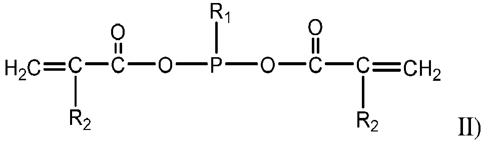

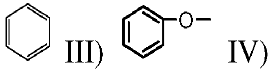

## Description

### FIELD OF THE INVENTION

The present invention relates to the field of batteries, in particular to an acrylate, a raw material composition of gel electrolyte for a lithium ion secondary battery containing acrylate, a gel electrolyte for a lithium ion secondary battery, and a lithium ion secondary battery and a preparation method thereof.

### BACKGROUND OF THE INVENTION

In recent years, the market has increasingly higher performance requirements for lithium ion batteries. On the one hand, the integration of portable electronic products has increased energy consumption. On the other hand, the rise of electric vehicles also requires batteries to have longer battery life. The battery problem has become a key factor restricting the development of the industry. How to further improve the battery capacity density, rate performance, cycle life, safety and reduce production costs is the focus of battery research.

The safety of lithium ion batteries is the main obstacle that plagues power batteries. lithium ion batteries can easily catch fire or even explode under abuse conditions such as overcharge, overdischarge, short circuit, and thermal shock. When the battery is abused, the internal temperature of the battery rises, causing the destruction of the solid electrolyte interface film on the negative electrode surface in the battery. A violent chemical reaction occurs between the components in the electrolyte and the negative electrode, and the organic solvent in the electrolyte decomposes to produce hydroxyl radicals and hydrogen radicals, thereby causing a chain reaction to generate a lot of heat. The generated heat promotes the reaction between the electrolyte and the lithium-intercalated negative electrode to intensify, and ultimately affects the safety of the battery.

### SUMMARY OF THE INVENTION

The object of the present invention is to provide an acrylate, a durable acrylate-containing gel electrolyte, and a lithium ion battery using the gel electrolyte.

In order to achieve the above object, the present invention provides an acrylate, the acrylate is any one or more of the following compounds represented by formula I) and formula II): 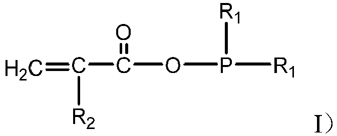 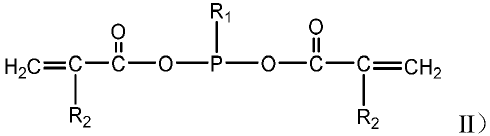 wherein, in formula I) and formula II), R₁ to R₂ each contain carbon atoms of 0-3, preferably each is any one of H, CH₃, C₂H₅, C₃H₇, C₄H₉, C₆H₅, CF₃, CF₃CH₂, CF₂HCH₂, CF₃CF₂, CF₂HCF₂CH₂, OCH₂CF₃,

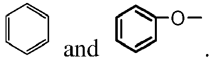

Preferably, the acrylate is one or two or more selected from the group consisting of:

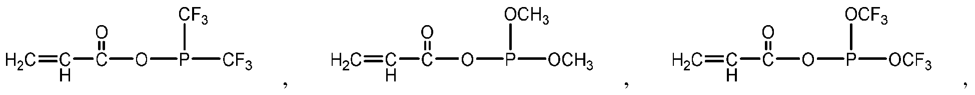

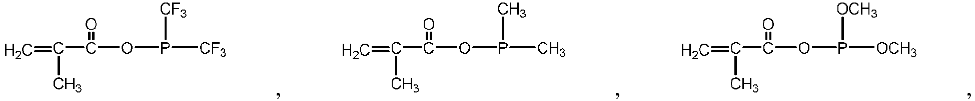

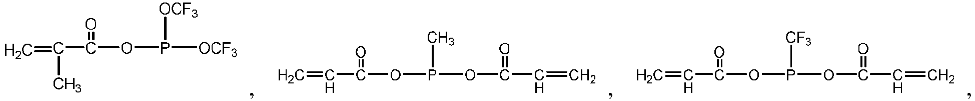

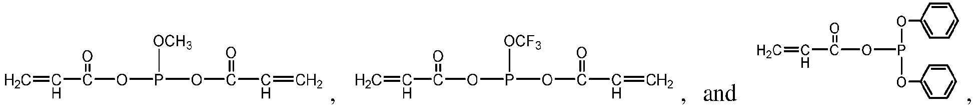

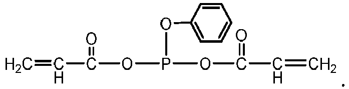

According to the second aspect of the present invention, the present invention provides a raw material composition of gel electrolyte for a lithium ion secondary battery, the composition contains a non-aqueous organic solvent, an electrolyte lithium salt, and the aforementioned acrylate. Preferably, the weight ratio of the non-aqueous organic solvent, the electrolyte lithium salt and the acrylate is 70-90: 10-20: 0.1-10.

Preferably, the non-aqueous organic solvent is one or two or more of ethylene carbonate, propylene carbonate, dimethyl carbonate, diethyl carbonate, ethyl methyl carbonate, methyl acetate, ethyl acetate, propyl acetate, butyl acetate, propyl propionate, ethyl propionate, and butyl propionate. Preferably, the electrolyte lithium salt is one or two or more of LiPF₆, LiClO₄, LiBOB, LiBF₄, LiO₂PF₂, LiODFB, LiTFSI, LiFSI, and LiC(CF₃SO₃)₃.

According to the third aspect of the present invention, the present invention provides a gel electrolyte for a lithium ion secondary battery, which is obtained by mixing and then polymerizing the above-mentioned composition and a thermal initiator.

Preferably, the weight ratio of the composition to the thermal initiator is 90-100: 0.5.

Preferably, the thermal initiator is selected from one or two of peroxy compounds and azo compounds.

Preferably, the polymerization conditions include a temperature of 60-100°C; and a time of 0.5-3 h. Preferably, the concentration of the lithium salt in the electrolyte is 0.5-2 mol/L.

According to a fourth aspect of the present invention, the present invention provides a lithium ion secondary battery, including a pole core and an electrolyte, wherein the pole core and the electrolyte are sealed in a battery case, and the pole core includes a positive electrode sheet, a negative electrode sheet and a separator, and the electrolyte is the above-mentioned electrolyte.

Preferably, the positive electrode sheet includes a positive electrode current collector and a positive electrode active material, a positive electrode binder, and a positive electrode active material for attaching to the positive electrode current collector, preferably, the positive electrode active material is one or two or more of LiFePO₄, LiCoO₂, LiMn₂O₄, LiNi_{0.5}Co_{0.2}Mn_{0.3}O₂, LiNi_{0.5}Mn_{1.5}O₄, LiNiₓCo_{y}Mn_{1-x-y}, and LiNiₓCo_{y}Al_{1-x-y}.

Preferably, the negative electrode sheet includes a negative electrode current collector and a negative electrode active material, a negative electrode binder, a negative electrode conductive agent, and a thickener for attaching to the negative electrode current collector, preferably, the negative electrode active material is one or two or more of natural graphite, artificial graphite, soft carbon, hard carbon, lithium titanate, silicon, and silicon-carbon alloy.

According to the fifth aspect of the present invention, the present invention provides preparation method for the lithium ion secondary battery, the preparation method comprises:
(1) an electrolyte lithium salt, a non-aqueous organic solvent and acrylate are mixed and then thermal initiator is added to obtain a pre-mixed electrolyte;
(2) the positive electrode sheet, negative electrode sheet and separator are made into a soft-packed battery core, packaged with a polymer, and then vacuum-baked, injected with the premixed electrolyte, sealed and allowed to stand, and then allowed to stand at a constant temperature of 60-100°C for 0.5-3 h to obtain a gel electrolyte, which is cooled and formed, and then the battery is sealed.

Preferably, conditions of vacuum baking include: a temperature of 60-120°C, and a time of 12-36h; and a time of sealing and standing is 12-36 h.

The gel electrolyte of the present invention can greatly improve the safety and durability of lithium ion batteries.

### DETAILED DESCRIPTION OF THE INVENTION

The endpoints and any values of the ranges disclosed herein are not limited to the precise range or value, and these ranges or values should be understood to include values close to these ranges or values. For numerical ranges, between the end values of each range, between the end values of each range and individual point values, and between individual point values can be combined with each other to obtain one or more new numerical ranges. These numerical ranges should be considered as specifically disclosed herein.

In order to achieve the above objective, the present invention provides an acrylate, the acrylate is any one or more of the following compounds represented by formula I) and formula 2): 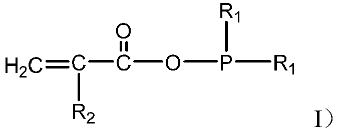 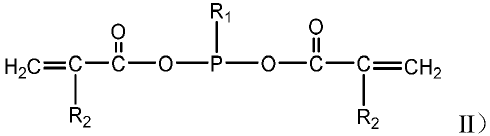 wherein, in formula I) and formula II), R₁ to R₂ each contains the number of carbon atoms is 0-3, preferably each is any one of H, CH₃, C₂H₅, C₃H₇, C₄H₉, C₆H₅, CF₃, CF₃CH₂, CF₂HCH₂, CF₃CF₂, CF₂HCF₂CH₂, OCH₂CF₃, 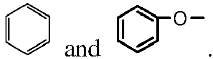 The use of the aforementioned preferred acrylate can improve the safety and durability of the electrolyte used in lithium ion batteries.

The present invention provides a method for preparing acrylate, which includes the following steps: it is obtained by reacting phosphorus trichloride and alkoxide or phosphorus trichloride and an organic base, and then reacting the resulting product with CH₂=CHCOONa.

Preferably, the organic base is methyl lithium, trifluoromethyl lithium, sodium methoxide, sodium methoxide, sodium trifluoromethoxide, sodium phenate, and the like.

According to a preferred embodiment of the present invention, the acrylate is one or two or more selected from the group consisting of:

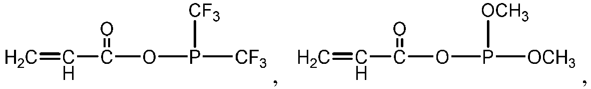

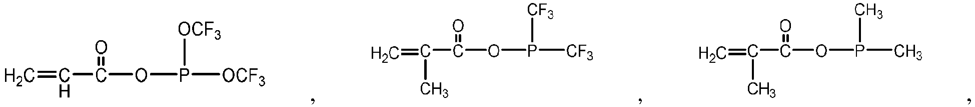

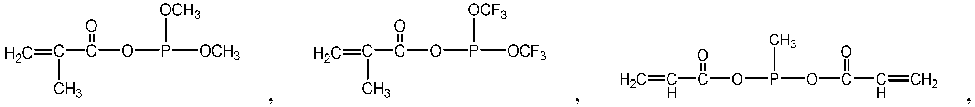

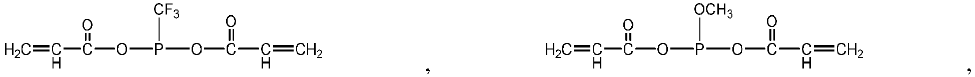

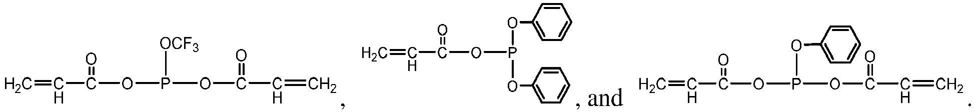

The present invention provides a raw material composition of gel electrolyte for a lithium ion secondary battery, which contains a non-aqueous organic solvent, an electrolyte lithium salt, and the aforementioned acrylate.

According to a preferred embodiment of the present invention, the weight ratio of non-aqueous organic solvent, electrolyte lithium salt and acrylate (m _{non-aqueous organic solvent}: m _{electrolyte lithium salt}: m _{acrylate}) is 70-90: 10-20: 0.1-10. The use of the aforementioned preferred ratio can improve the safety and durability of the electrolyte used in lithium ion batteries.

For example, the weight ratio of non-aqueous organic solvent, electrolyte lithium salt and acrylate (m _{non-aqueous organic solvent}: m _{electrolyte lithium salt}: m _{acrylate}) can be 70: 10: 0.1, 75: 10: 0.1, 80: 10: 0.1, 85: 10: 0.1, 90: 10: 0.1, 70: 15: 0.1, 75: 15: 0.1, 80: 15: 0.1, 85: 15: 0.1, 90: 15: 0.1, 70: 20: 0.1, 75: 20: 0.1, 80: 20: 0.1, 85: 20: 0.1, 90: 20: 0.1, 70: 10: 1, 70: 10: 5, 70: 10: 10, 80: 10: 1, 80: 10: 5, 80: 10: 10, 90: 10: 1, 90: 10: 5, 90: 10: 10, 70: 20: 1, 70: 20: 5, 70: 20: 10, 80: 20: 1, 80: 20: 5, 80: 20: 10, 90: 20: 1, 90: 20: 5, 90: 20: 10, etc.

In the present invention, the type of non-aqueous organic solvents can be selected in a wide range, and the selection of the solvents should be reasonably matched to ensure that the viscosity of the electrolyte is small and the conductivity is relatively high. Commonly used organic solvents can be used in the present invention. According to a preferred embodiment of the present invention, the non-aqueous organic solvent is one or two or more of ethylene carbonate, propylene carbonate, dimethyl carbonate, diethyl carbonate, ethyl methyl carbonate, methyl acetate, ethyl acetate, propyl acetate, butyl acetate, propyl propionate, ethyl propionate, and butyl propionate. The use of the aforementioned preferred organic solvent can improve the safety and durability of the electrolyte used in lithium ion batteries.

In the present invention, the type of electrolyte lithium salt can be selected in a wide range. Commonly used electrolyte lithium salts can be used in the present invention. According to a preferred embodiment of the present invention, the electrolyte lithium salt is one or two or more of LiPF₆, LiClO₄, LiBOB, LiBF₄, LiO₂PF₂, LiODFB, LiTFSI, LiFSI and LiC(CF₃SO₃)₃.

The present invention provides a gel electrolyte for lithium ion batteries, which is obtained by mixing and then polymerizing the above-mentioned composition and a thermal initiator.

According to a preferred embodiment of the present invention, the weight ratio of the composition to the thermal initiator (m _{composition}: m _{thermal initiator}) is 90-100: 0.5. The use of the aforementioned preferred ratio can improve the safety and durability of the electrolyte used in lithium ion batteries. For example, the weight ratio of the composition to the thermal initiator (m _{composition}: m _{thermal initiator}) may be 90: 0.5, 91: 0.5, 92: 0.5, 93: 0.5, 94: 0.5, 95: 0.5 , 96: 0.5, 97: 0.5, 98: 0.5, 99: 0.5, 100: 0.5, etc.

In the present invention, the type of thermal initiator can be selected in a wide range. According to a preferred embodiment of the present invention, the thermal initiator is selected from one or two of peroxy compounds and azo compounds. The use of the aforementioned preferred ratio can improve the safety and durability of the electrolyte used in lithium-ion batteries.

For example, the peroxide can be: diphenylformyl peroxide (BPO).

The azo compound can be: azobisisobutyronitrile (AIBN).

In the present invention, the polymerization conditions can be selected in a wide range. According to the present invention, it preferably includes a temperature of 60-100°C and a time of 0.5-3 h.

For example, the temperature can be 60°C, 70°C, 80°C, 90°C, 100°C, etc., and the time can be 0.5 h, 1 h, 2 h, 3 h, etc.

According to a preferred embodiment of the present invention, the lithium salt concentration in the electrolyte is preferably 0.5-2 mol/L.

For example, the lithium salt concentration can be 0.5 mol/L, 1 mol/L, 1.5 mol/L, 2 mol/L, and so on.

The present invention provides a method for preparing a gel electrolyte for a lithium ion secondary battery, which comprises the following steps:
it is obtained by mixing the raw material composition of gel electrolyte for lithium ion secondary batteries with a thermal initiator and then performing polymerization.

According to a preferred embodiment of the present invention, the weight ratio of the composition to the thermal initiator (m _{composition}: m _{thermal initiator}) is 90-100: 0.5. The use of the aforementioned preferred ratio can improve the safety and durability of the electrolyte used in lithium ion batteries. In the present invention, the type of thermal initiator can be selected in a wide range. According to a preferred embodiment of the present invention, the thermal initiator is selected from one or two of peroxy compounds and azo compounds. The use of the aforementioned preferred ratio can improve the safety and durability of the electrolyte used in lithium ion batteries.

For example, the peroxide can be: dibenzoyl peroxide (BPO)

The azo compound can be: azobisisobutyronitrile (AIBN)

In the present invention, the polymerization conditions can be selected in a wide range. according to the present invention, it preferably includes a temperature of 60-100°C and a time of 0.5-3 h. According to a preferred embodiment of the present invention, the lithium salt concentration in the electrolyte is preferably 0.5-2 mol/L.

The electrolyte of the present invention can be used in various lithium ion batteries, and the battery of the present invention is particularly suitable for lithium ion secondary batteries.

The present invention provides a lithium ion secondary battery. The battery includes a pole core and an electrolyte. The pole core and the electrolyte are sealed in a battery case. The pole core includes a positive electrode sheet, a negative electrode sheet, and a separator. The electrolyte is the electrolyte described above.

In the present invention, the positive electrode sheet preferably includes a positive electrode current collector, a positive electrode active material, a positive electrode binder, and a positive electrode conductive agent for attaching to the positive electrode current collector.

Preferably, in the present invention, the positive electrode active material is at least one selected from the group consisting of LiFePO₄, LiCoO₂, LiMn₂O₄, LiNi_{0.5}Co_{0.2}Mn_{0.3}O₂, LiNiₓMn₂₋ₓO₄, LiNi_{0.5}Mn_{1.5}O₄, LiNiₓCo_{y}Mn_{1-x-y} and LiNiₓCo_{y}Al_{1-x-y}, LiNiₓCo_{y}Mn_{1-x-y}O₂, LiNiₓCo_{y}Al_{1-x-y}O_{2.} Wherein, the values of x and y can be conventionally selected in the field, specifically,
in LiNiₓMn₂₋ₓO₄, x is greater than 0 and less than 2.

In LiNiₓCo_{y}Mn_{1-x-y}O₂, x is greater than 0 and less than 1, and y is greater than 0 and less than 1.

In LiNiₓCo_{y}Al_{1-x-y}O₂, x is greater than 0 and less than 1, and y is greater than 0 and less than 1. Preferably, based on the total weight of the positive electrode dry material, the content of the positive electrode active material is 90-98% by weight.

For example, based on the total weight of the positive electrode dry material, the content of the positive electrode active material may be 90% by weight, 91% by weight, 92% by weight, 93% by weight, 94% by weight, 95% by weight, 96% by weight, 97% by weight, 98% by weight, etc.

In the present invention, the positive electrode binder includes but is not limited to at least one of polytetrafluoroethylene, polyvinylidene fluoride, and styrene butadiene rubber.

Preferably, based on the total weight of the positive electrode dry material, the content of the positive electrode binder is 0.01-8% by weight.

For example, based on the total weight of the positive electrode dry material, the content of the positive electrode binder is 0.01% by weight, 0.05% by weight, 0.1% by weight, 0.5% by weight, 1% by weight, 2% by weight, 3% by weight, 4% by weight, 5% by weight, 6% by weight, 7% by weight, 8% by weight, etc.

Preferably, in the present invention, the positive electrode conductive agent includes but is not limited to at least one of SP, acetylene black, KS-16, and carbon nanotubes.

Preferably, based on the total weight of the positive electrode dry material, the content of the positive electrode conductive agent is 1-8% by weight.

For example, based on the total weight of the positive electrode dry material, the content of the positive electrode conductive agent may be 1% by weight, 2% by weight, 3% by weight, 4% by weight, 5% by weight, 6% by weight, 7% by weight, 8% by weight, etc.

Preferably, in the present invention, the current collector of the positive electrode is aluminum foil.

Preferably, in the present invention, the positive electrode sheet is obtained by the following steps: the positive electrode active material, the positive electrode conductive agent, and the positive electrode binder are dispersed in a dispersant to prepare a positive electrode slurry, and then the positive electrode slurry is coated on the positive electrode current collector and dried to obtain a positive electrode sheet, and then the dried positive electrode sheet is subjected to rolling, slitting, punching, and vacuum high-temperature drying.

The dispersant used in the preparation of the positive electrode slurry in the present invention includes but is not limited to at least one of N-methylpyrrolidone, N,N-dimethylformamide, N,N-diethylformamide, dimethylsulfoxide, tetrahydrofuran, water and alcoholic dispersants. Preferably, in the positive electrode slurry, the amount of the positive electrode dispersant is such that the solid content of the active material in the positive electrode slurry is 40-90% by weight, more preferably 50-85% by weight. Therefore, the dispersion of the positive electrode slurry can be made more uniform, and the coating performance can be better.

The drying conditions of the positive electrode sheet are selected according to the type of dispersant used, and the dispersant in the positive electrode slurry can be removed without affecting the performance of the electrode sheet.

According to a preferred embodiment of the present invention, the positive electrode active material is one or two or more of LiFePO₄, LiCoO₂, LiNi_{0.5}Co_{0.2}Mn_{0.3}O₂, LiMn₂O₄, LiNi_{0.5}Mn_{1.5}O₄, LiNiₓCo_{y}Mn_{1-x-y} and LiNiₓCo_{y}Al_{1-x-y}.

In the present invention, the negative electrode sheet preferably includes a negative electrode current collector and a negative electrode active material, a negative electrode binder, a negative electrode conductive agent, and a thickener for attaching to the negative electrode current collector. Preferably, in the present invention, the negative electrode active material is at least one selected from the group consisting of graphite (artificial graphite and/or natural graphite), mesophase carbon microspheres, soft carbon, hard carbon, lithium titanate, silicon, and silicon carbon alloy.

According to a preferred embodiment of the present invention, the negative active material is one or two or more of natural graphite, artificial graphite, soft carbon, hard carbon, lithium titanate, silicon, and silicon-carbon alloy.

According to a preferred embodiment of the present invention, based on the total weight of the negative electrode dry material, the content of the negative electrode active material is 90-98% by weight.

For example, based on the total weight of the negative electrode dry material, the content of the negative electrode active material may be 90% by weight, 91% by weight, 92% by weight, 93% by weight, 94% by weight, 95% by weight, 96% by weight, 97% by weight, 98% by weight, etc. In the present invention, the negative electrode binder includes but is not limited to at least one of styrene-butadiene rubber, polyvinyl alcohol, and polytetrafluoroethylene.

According to a preferred embodiment of the present invention, based on the total weight of the negative electrode dry material, the content of the negative electrode binder is 0.1-8% by weight. For example, based on the total weight of the negative electrode dry material, the content of the negative electrode binder may be 0.1% by weight, 0.5% by weight, 1% by weight, 2% by weight, 3% by weight, 4% by weight, 5% by weight, 6 Weight%, 7% by weight, 8% by weight, etc.

In the present invention, the negative electrode conductive agent includes but is not limited to at least one of Super P, acetylene black, KS-16, and carbon nanotubes.

Preferably, based on the total weight of the negative electrode dry material, the content of the negative electrode conductive agent is 0.1-8% by weight.

For example, based on the total weight of the negative electrode dry material, the content of the negative electrode conductive agent may be 0.1% by weight, 0.5% by weight, 1% by weight, 2% by weight, 3% by weight, 4% by weight, 5% by weight, and 6% by weight, 7% by weight, 8% by weight, etc.

Preferably, in the present invention, the thickener is sodium carboxymethyl cellulose, and based on the total weight of the negative electrode dry material, the content of the thickener is 0.1 to 5% by weight.

For example, based on the total weight of the negative electrode dry material, the content of the thickener may be 0.1% by weight, 0.5% by weight, 1% by weight, 2% by weight, 3% by weight, 4% by weight, 5% by weight, etc.

In the present invention, the current collector of the negative electrode is preferably copper foil.

Preferably, in the present invention, the negative electrode is obtained by the following: the negative electrode active material, the negative electrode conductive agent, the negative electrode binder and the thickener are dispersed in the dispersant to prepare the negative electrode slurry, and then the negative electrode slurry is coated on the current collector and dried to obtain a negative electrode sheet, and then the dried negative electrode sheet is subjected to rolling, slitting, punching, and vacuum high-temperature drying.

The dispersant used in the preparation of the negative electrode slurry in the present invention includes, but is not limited to, at least one of N-methylpyrrolidone, N,N-dimethylformamide, N,N-diethylformamide, dimethylsulfoxide, tetrahydrofuran, water and alcoholic dispersants.

Preferably, in the negative electrode slurry, the negative electrode dispersant is used in an amount such that the solid content of the active material in the negative electrode slurry is 40-90% by weight, more preferably 50-85% by weight. As a result, the negative electrode slurry is more uniformly dispersed and has better coating performance.

The drying conditions of the negative electrode sheet are selected according to the type of dispersant used, and the dispersant in the negative electrode slurry can be removed without affecting the performance of the electrode sheet.

In the present invention, the separator is provided between the positive electrode and the negative electrode, and the material of the separator includes but is not limited to at least one of polypropylene, polyethylene or polyethylene and polypropylene composite separator.

In the present invention, the lithium ion secondary battery includes but is not limited to the following steps:
S1 making the positive electrode sheet, negative electrode sheet and separator of the above-mentioned lithium ion battery into a battery core in a laminated manner;
S2 vacuum-baking the battery core prepared by S1, putting it in the battery case, injecting the above-mentioned electrolyte, and then sealing the battery case.

The use of the electrolyte of the present invention for lithium ion secondary batteries can improve the durability and safety of lithium ion batteries, and there is no special requirement for the preparation method of lithium ion secondary batteries, for example, it includes:
S1 making the above-mentioned lithium ion battery positive electrode sheet, negative electrode sheet and separator into a battery core in a laminated manner;
S2 vacuum-baking the battery core prepared by S1, putting it in the battery case, injecting the above-mentioned electrolyte, and then sealing the battery case.

According to a preferred embodiment of the present invention, the present invention provides a preparation method of a lithium ion secondary battery, the preparation method including:
(1) an electrolyte lithium salt, a non-aqueous organic solvent and acrylate are mixed and then a thermal initiator is added to obtain a pre-mixed electrolyte;
(2) the positive electrode sheet, negative electrode sheet and separator are made into a soft-packed battery core, packaged with polymer, and then vacuum-baked, injected with the premixed electrolyte, sealed and allowed to stand, and then allowed to stand at a constant temperature of 60-100°C for for 0.5-3 h to obtain a gel electrolyte, which is cooled and formed, and then the battery is sealed.

For example, stand still at a constant temperature of 60°C, 70°C, 80°C, 90°C, 100°C, etc., and the standing time can be 0.5h, 1h, 2h, 3h, etc.

According to a preferred embodiment of the present invention, the conditions of vacuum baking include: a temperature of 60-120° C. and a time of 12-36 h. Using the aforementioned baking conditions can further improve the durability and safety of the battery.

For example, the temperature can be 60°C, 70°C, 80°C, 90°C, 100°C, 110°C, 120°C, etc.; and the time can be 12 h, 15 h, 18 h, 21 h, 24 h, 27 h, 30 h, 33 h, 36 h, etc.

According to a preferred embodiment of the present invention, the sealing and standing time is 12-36 h.

For example, the sealing and standing time can be 12 h, 15 h, 18 h, 21 h, 24 h, 27 h, 30 h, 33 h, 36 h, etc.

The present invention will be further described below in conjunction with specific embodiments, specific examples, comparative examples and test results.

### Example 1

### (1) Preparation of Positive Electrode Sheet of Lithium Ion Battery

Nickel cobalt manganese lithium (LiNi_{0.5}Co_{0.2}Mn_{0.3}O₂) as the positive electrode active material, the conductive agent super-P, and the binder PVDF are dissolved in the solvent N-methylpyrrolidone at a mass ratio of 96: 2: 2 and mixed uniformly to make a positive electrode slurry. After that, the positive electrode slurry is uniformly coated on the current collector aluminum foil with a coating amount of 0.040 g/cm², followed by drying at 120°C, then cold pressing, cutting, slitting, and punching, and then drying at 85°C for 4 hours under vacuum conditions, welding the tabs to make the positive electrode sheet of the lithium ion battery that meets the requirements.

### (2) Preparation of Negative Electrode Sheet of Lithium Ion Battery

Artificial graphite as the negative active material, conductive agent super-P, thickener CMC, and binder SBR are dissolved in deionized water at a mass ratio of 95.5: 1: 1: 2.5 to make a negative electrode slurry, and then the negative electrode slurry is uniformly coated on the current collector copper foil with a coating amount of 0.020 g/cm², then drying at 85°C, then cold pressing, cutting, slitting, and punching, and then drying at 110°C under vacuum for 4 h, welding the tabs to make the negative electrode sheet of the lithium ion battery that meets the requirements.

### (3) Preparation of Electrolyte of Lithium Ion Battery

The electrolyte of the lithium ion battery uses LiPF6 (15% by weight) as the lithium salt, and uses a mixture of ethylene carbonate (EC) and ethyl methyl carbonate (EMC) as the non-aqueous solvent. Wherein, the EC content is 22.2% by weight and the EMC content is 51.8% by weight. 4% by weight of 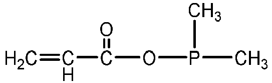 is added, stirred evenly, and then 7% by weight of azobisisobutyronitrile as the thermal initiator is added for polymerization, polymerized at 60°C for 2 h to obtain electrolyte of lithium ion battery (free acid <20ppm, moisture < 15ppm).

### (4) Lithium Ion Battery Preparation

The above-prepared positive electrode sheet, negative electrode sheet and separator are made into a soft-packed battery core in a laminated manner, packaged with polymer, and vacuum-baked at 85°C for 24 hours, injected with the above-prepared electrolyte, and sealed and allowed to stand for 24 hours. the battery is placed in a thermostat at 80°C for 1 hour to polymerize the acrylate compound to genarate a cross-linked polymer to form a gel electrolyte, and cooled to room temperature for formation. After the formation is completed, the battery is sealed to produce a lithium-ion battery with a capacity of 2000 mAh.

Wherein, the preparation method of 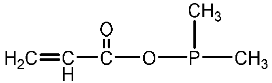 is as follows:

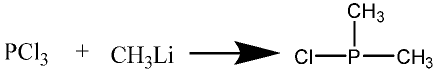

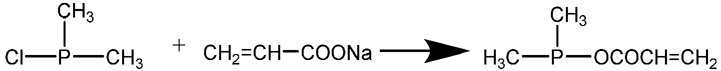

100 ml of dichloromethane and 13.8 g of phosphorus trichloride solid are added to a three-necked flask equipped with a reflux condenser, stirred at room temperature, and 4.4 g of methyl lithium solution in dichloromethane is added through a constant pressure addition funnel. After stirring and reacting for 1 hour, continue to add 9.4 g of CH₂=CHCOONa solid, and after fully stirring and reacting for 2 hours a yellow mixed solution is obtained. The yellow mixed solution is filtered to obtain a yellow liquid, which is distilled under reduced pressure to obtain 6.2 g of yellow liquid product with a yield of 46.6%.

The obtained compound is subjected to NMR analysis, and the data is as follows:
1H-NMR: (CDCl₃,400MHz) δ=6.47(2H), 6.21(1H),0.95(6H)

The prepared lithium ion secondary battery is first charged and formed according to the following steps: charged with a constant current of 0.1C to 3.6V, charged with a constant current of 0.2C to 3.95V, vacuum sealed a second time, and then charged with a constant current of 0.2C to 4.25 V;after being left at room temperature for 24 hours, discharged to 3.0V at a constant current of 0.2C to obtain a 4.25V of ion secondary battery of LiNi_{0.5}Co_{0.2}Mn_{0.3}O₂/artificial graphite lithium.

### Examples 2-14

Examples 2-14 are used to illustrate the electrolyte of the lithium ion battery, lithium ion battery and the preparation method thereof disclosed in the present invention, including most of the operation steps in Example 1. In addition to the parameters in Table 1 below, other parameters are the same as those in Example 1.

Wherein, the preparation method of 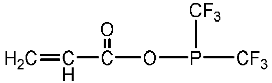 in Example 2 is as follows:

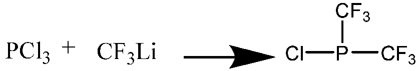

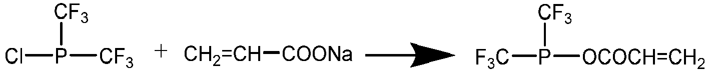

100 ml of dichloromethane and 13.8g of phosphorus trichloride solid are added to a three-necked flask equipped with a reflux condenser, stirred at room temperature, and 15.2 g of trifluoromethyllithium solution in dichloromethane is added through a constant pressure addition funnel. After stirring and reacting for 1 hour, continue to add 9.4 g of CH₂=CHCOONa solid, and after fully stirring and reacting for 2 hours a yellow mixed solution is obtained. The yellow mixed solution is filtered to obtain a yellow liquid, which is distilled under reduced pressure to obtain 10.8 g of yellow liquid product with a yield of 44.1%.

The obtained compound is subjected to NMR analysis, and the data is as follows:
1H-NMR: (CDCl₃,400MHz) δ=6.54(2H), 6.32(1H)

The preparation method of 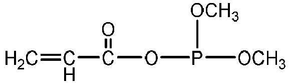 in Example 3 is as follows:

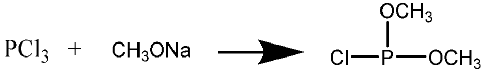

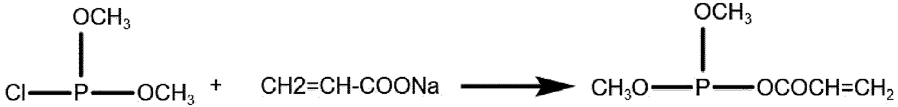

100 ml of dichloromethane and 13.8g of phosphorus trichloride solid are added to a three-necked flask equipped with a reflux condenser, stirred at room temperature, and 10.8 g of sodium methoxide solution in dichloromethane is added through a constant pressure addition funnel. After stirring and reacting for 1 hour, continue to add 9.4 g of CH₂=CHCOONa solid, and after fully stirring and reacting for 2 hours a yellow mixed solution is obtained. The yellow mixed solution is filtered to obtain a yellow liquid, which is distilled under reduced pressure to obtain 9.4 g of yellow liquid product with a yield of 60.3%.

The obtained compound is subjected to NMR analysis, and the data is as follows:
1H-NMR: (CDCl₃,400MHz) δ=6.41(2H), 6.18(1H),3.34(6H)

The preparation method of 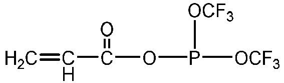 in Example 4 is as follows: 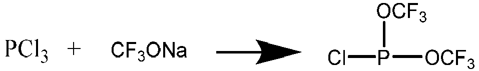 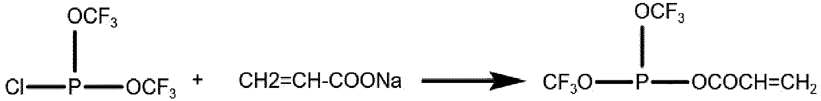 100 ml of dichloromethane and 13.8g of phosphorus trichloride solid are added to a three-necked flask equipped with a reflux condenser, stir at room temperature, and 21.4 g of sodium trifluoromethoxide solution in dichloromethane is added through a constant pressure addition funnel. After stirring and reacting for 1 hour, continue to add 9.4 g of CH₂=CHCOONa solid, and after fully stirring and reacting for 2 hours a yellow mixed solution is obtained. The yellow mixed solution is filtered to obtain a yellow liquid, which is distilled under reduced pressure to obtain 13.6 g of yellow liquid product with a yield of 43.5%.

The obtained compound is subjected to NMR analysis, and the data is as follows:
1H-NMR: (CDCl₃,400MHz) δ=6.44(2H), 6.27(1H)

The preparation method of 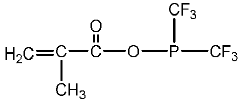 in Example 5 is as follows:

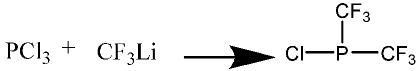

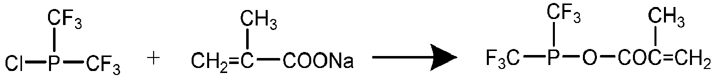

100 ml of dichloromethane and 13.8g of phosphorus trichloride solid are added to a three-necked flask equipped with a reflux condenser, stirred at room temperature, and 15.2 g of trifluoromethyl lithium solution in dichloromethane is added through a constant pressure addition funnel. After stirring and reacting for 1 hour, continue to add 10.8 g of sodium methacrylate solid, and after fully stirring and reacting for 2 hours a yellow mixed solution is obtained. The yellow mixed solution is filtered to obtain a yellow liquid, which is distilled under reduced pressure to obtain 11.3 g of ayellow liquid product with a yield of 43.5%.

The obtained compound is subjected to NMR analysis, and the data is as follows:
1H-NMR: (CDCl₃,400MHz) δ=6.56(2H), 2.03(3H)

The preparation method of 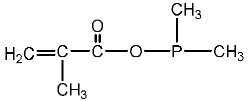 in Example 6 is as follows: 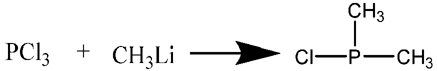 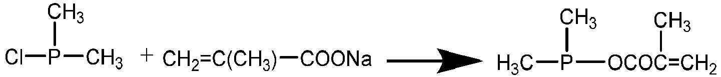 100 ml of dichloromethane and 13.8g of phosphorus trichloride solid are added to a three-necked flask equipped with a reflux condenser, stirred at room temperature, and 4.4 g of methyl lithium solution in dichloromethane is added through a constant pressure addition funnel. After stirring and reacting for 1 hour, continue to add 10.8 g of sodium methacrylate solid, and after fully stirring and reacting for 2 hours a yellow mixed solution is obtained. The yellow mixed solution is filtered to obtain a yellow liquid, which is distilled under reduced pressure to obtain 7.1g of yellow liquid product with a yield of 46.7%.

The obtained compound is subjected to NMR analysis, and the data is as follows:
1H-NMR: (CDCl₃,400MHz) δ=6.17(2H), 2.02(3H),0.95(6H)

The preparation method of 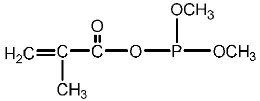 in Example 7 is as follows:

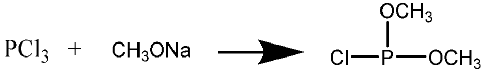

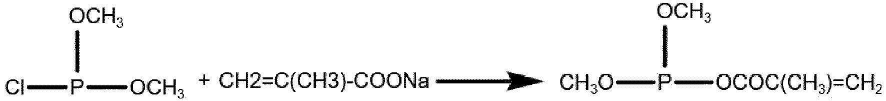

100 ml of dichloromethane and 13.8g of phosphorus trichloride solid are added to a three-necked flask equipped with a reflux condenser, stirred at room temperature, and add 10.8 g of sodium methoxide solution in dichloromethane is added through a constant pressure addition funnel. After stirring and reacting for 1 hour, continue to add 10.8 g of sodium methacrylate solid, and after fully stirring and reacting for 2 hours a yellow mixed solution is obtained. The yellow mixed solution is filtered to obtain a yellow liquid, which is distilled under reduced pressure to obtain 8.9 g of yellow liquid product with a yield of 52.7%.

The obtained compound is subjected to NMR analysis, and the data is as follows:
1H-NMR: (CDCl₃,400MHz) δ=6.41(2H),3.56(6H),1.98(3H)

The preparation method of 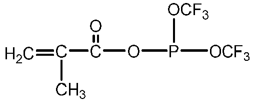 in Example 8 is as follows:

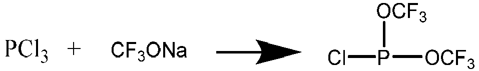

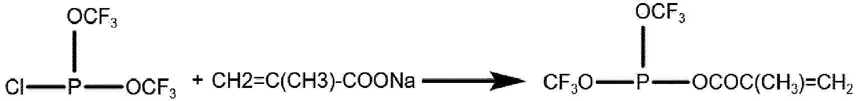

100 ml of dichloromethane and 13.8 g of phosphorus trichloride solid are added to a three-necked flask equipped with a reflux condenser, stirred at room temperature, and 21.4 g of sodium trifluoromethoxide solution in dichloromethane is added through a constant pressure addition funnel. After stirring and reacting for 1 hour, continue to add 10.8 g of sodium methacrylate solid, and after fully stirring and reacting for 2 hours a yellow mixed solution is obtained. The yellow mixed solution is filtered to obtain a yellow liquid, which is distilled under reduced pressure to obtain 14.1 g of yellow liquid product with a yield of 50.2%.

The obtained compound is subjected to NMR analysis, and the data is as follows:
1H-NMR: (CDCl₃,400MHz) δ=6.24(2H), 2.03(3H)

The preparation method of 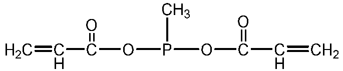 in Example 9 is as follows: 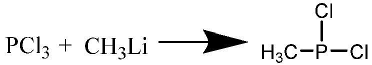 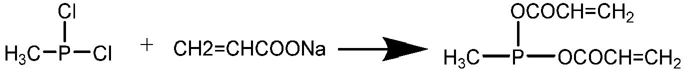 100 ml of dichloromethane and 13.8g of phosphorus trichloride solid are added to a three-necked flask equipped with a reflux condenser, stirred at room temperature, and 2.2 g of methyl lithium solution in dichloromethane is added through a constant pressure addition funnel. After stirring and reacting for 1 hour, continue to add 18.8 g of sodium acrylate solid, and after fully stirring and reacting for 2 hours a yellow mixed solution is obtained. The yellow mixed solution is filtered to obtain a yellow liquid, which is distilled under reduced pressure to obtain 7.6 g of yellow liquid product with a yield of 46.6%.

The obtained compound is subjected to NMR analysis, and the data is as follows:
1H-NMR: (CDCl₃,400MHz) δ=6.38(4H), 6.10(2H),1.09(3H)

The preparation method of 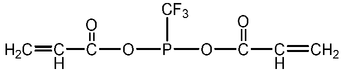 in Example 10 is as follows:

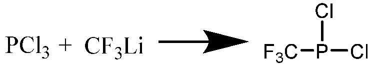

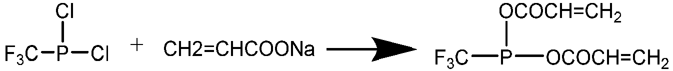

100 ml of dichloromethane and 13.8 g of phosphorus trichloride solid are added to a three-necked flask equipped with a reflux condenser, stirred at room temperature, and 7.8 g of sodium methoxide solution in dichloromethane is added through a constant pressure addition funnel. After stirring and reacting for 1 hour, continue to add 18.8 g of sodium acrylate solid, and after fully stirring and reacting for 2 hours a yellow mixed solution is obtained. The yellow mixed solution is filtered to obtain a yellow liquid, which is distilled under reduced pressure to obtain 11.2 g of yellow liquid product with a yield of 51.6%.

The obtained compound is subjected to NMR analysis, and the data is as follows:
1H-NMR: (CDCl₃,400MHz) δ=6.46(4H), 6.13(2H)

The preparation method of 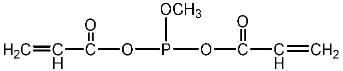 in Example 11 is as follows:

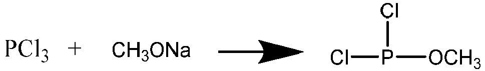

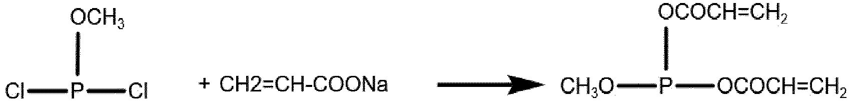

100 ml of dichloromethane and 13.8 g of phosphorus trichloride solid are added to a three-necked flask equipped with a reflux condenser, stirred at room temperature, and 5.4 g of sodium trifluoromethoxide solution in dichloromethane is added through a constant pressure addition funnel. After stirring and reacting for 1 hour, continue to add 18.8 g of sodium acrylate solid, and after fully stirring and reacting for 2 hours a yellow mixed solution is obtained. The yellow mixed solution is filtered to obtain a yellow liquid, which is distilled under reduced pressure to obtain 7.4 g of yellow liquid product with a yield of 41.3%.

The obtained compound is subjected to NMR analysis, the data is as follows:
1H-NMR: (CDCl₃,400MHz) δ=6.14(4H),3.46(3H),2.01(6H)

The preparation method of 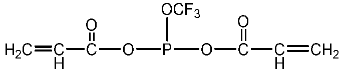 in Example 12 is as follows:

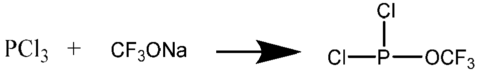

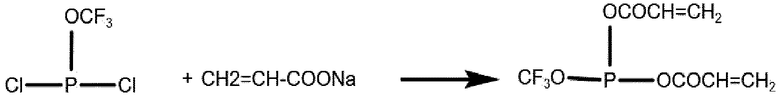

100 ml of dichloromethane and 13.8g of phosphorus trichloride solid are added to a three-necked flask equipped with a reflux condenser, stirred at room temperature, and 10.7 g of sodium phenolate solution in dichloromethane is added through a constant pressure addition funnel. After stirring and reacting for 1 hour, continue to add 18.8 g of sodium acrylate solid, and after fully stirring and reacting for 2 hours a yellow mixed solution is obtained. The yellow mixed solution is filtered to obtain a yellow liquid, which is distilled under reduced pressure to obtain 11.5 g of yellow liquid product with a yield of 49.6%.

The obtained compound is subjected to NMR analysis, the data is as follows:
1H-NMR: (CDCl₃,400MHz) δ=6.24(4H), 2.07(6H)

The preparation method of 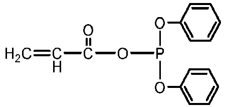 in Example 13 is as follows:

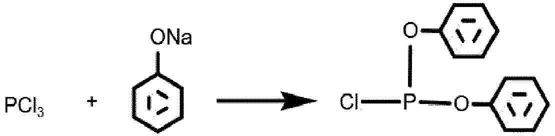

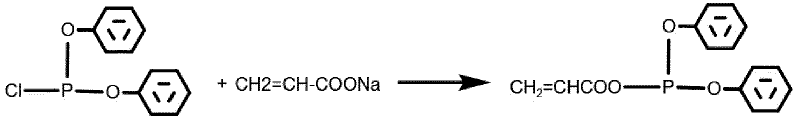

100 ml of dichloromethane and 13.8 g of phosphorus trichloride solid are added to a three-necked flask equipped with a reflux condenser, stirred at room temperature, and 23.2 g of sodium phenolate solution in dichloromethane is added through a constant pressure addition funnel. After stirring and reacting for 1 hour, continue to add 9.4 g of sodium acrylate solid, and after fully stirring and reacting for 2 hours a yellow mixed solution is obtained. The yellow mixed solution is filtered to obtain a yellow liquid, which is distilled under reduced pressure to obtain 13.8 g of yellow liquid product with a yield of 47.9%.

The obtained compound is subjected to NMR analysis, and the data is as follows:
1H-NMR:
(CDCl₃,400MHz)δ=7.24(4H),6.97(2H),6.82(4H),6.21(2H),1.97(3H)

The preparation method of 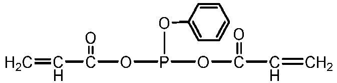 in Example 14 is as follows:

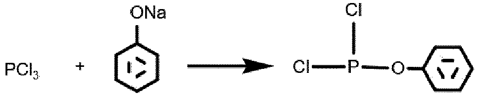

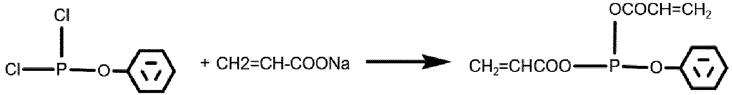

100 ml of dichloromethane and 13.8 g of phosphorus trichloride solid are added to a three-necked flask to equipped with a reflux condenser, stirred at room temperature, and 11.6 g of sodium phenolate solution in dichloromethane is added through a constant pressure addition funnel. After stirring and reacting 1h, continue to add 18.8 g of sodium acrylate solid, and after fully stirring and reacting for 2 hours, a yellow mixed solution is obtained. The yellow mixed solution is filtered to obtain a yellow liquid, which is distilled under reduced pressure to obtain 12.1 g of yellow liquid product with a yield of 45.5%.

The obtained compound is subjected to NMR analysis, and the data is as follows:
1H-NMR:
(CDCl₃,400MHz) δ=7.24(2H), 6.97(1H),6.83(2H),6.23(4H),1.99(6H)

**Table 1**

| Group | additive | Acrylate compound | Lithium salt |
|---|---|---|---|
| Example 2 | / | 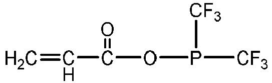 | 1.1M LiPF₆ |
| Example 3 | / | 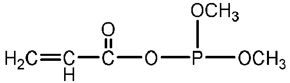 | 1.1M LiPF₆ |
| Example 4 | / | 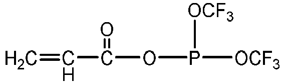 | 1.1M LiPF₆ |
| Example 5 | / | 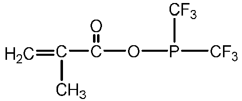 | 1.1M LiPF₆ |
| Example 6 | / | 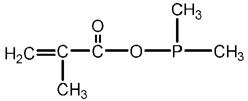 | 1.1M LiPF₆ |
| Example 7 | / | 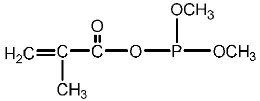 | 1.1M LiPF₆ |
| Example 8 | / | 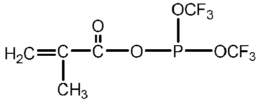 | 1.1M LiPF₆ |
| Example 9 | / | 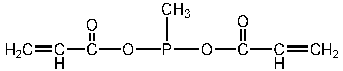 | 1.1M LiPF₆ |
| Example 10 | / | 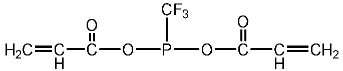 | 1.1M LiPF₆ |
| Example 11 | / | 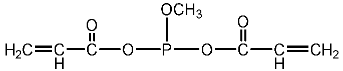 | 1.1M LiPF₆ |
| Example 12 | / | 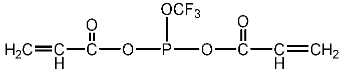 | 1.1M LiPF₆ |
| Example 13 | / | 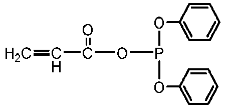 | 1.1M LiPF₆ |
| Example 14 | / | 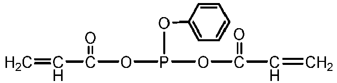 | 1.1M LiPF₆ |
| Comparative Example 1 | 0.5% by weight of VC, 1% by weight of PS | / | 1.1M LiPF₆ |
| Comparative Example 2 | 0.5% by weight of VC, 1% by weight of PS, 1% by weight of LiFSI | / | 1.1M LiPF₆ |

### Capacity test

At room temperature, the battery core is charged to 4.2V with a constant current of 0.5C , charged with a constant voltage, stopped to charge when the charge termination current drops to 0.05C, and left for 60 min; discharged to 3.0V with 0.5C current, and left for 60 min toget the discharge capacity, the result of which is as follows in Table 2.

### Internal resistance test

In a room temperature environment, the battery core is charged to 3.6V, and then an electrochemical workstation is used to test the AC impedance of the battery core. When the scanning frequency is 1000 Hz, the internal resistance test results are recorded. The results are shown in Table 2.

### Acupuncture experiment

At room temperature, the battery core is charged to 4.2V with a constant current of 0.5C, then charged with a constant voltage, stopped to charge when the charge termination circuit drops to 0.05C, and left for 60 min. A high temperature resistant steel needle of Φ5mm~Φ8mm (the cone angle of the needle tip is 45°~60°, the surface of the needle is smooth, no rust, oxide layer and oil stain), with the speed of (25±5)mm/s is used to penetrate from the direction perpendicular to the electrode plate of the battery core, and the penetrating position should be close to the geometric center of the acupunctured surface, and the steel needle remains in the battery core. The experimental results are shown in Table 2.

### Extrusion test

At room temperature, the battery core is charged to 4.2V with a constant current of 0.5C, then charged with a constant voltage charge, stopped to charge when the charge termination circuit drops to 0.05C, and left for 60 min. The test is carried out under the following conditions:
extrusion direction: applying pressure perpendicular to the direction of the electrode plate of the battery core;
extrusion plate form: a semi-cylinder with a radius of 75mm, the length of the semi-cylinder is greater than the size of the battery core being extruded;
extrusion speed: 51 mm/s;
extrusion degree: stopping after the voltage reaches 0V or the deformation reaches 30% or the extrusion force reaches 100KN, and observe for 60 min. The observation results are shown in Table 2.

Table 2 shows the electrical performance and safety performance test results of the Examples and Comparative Examples.

**Table 2**

| Group | Cell capacity (mAh) | Internal resistance (mQ) | Acupuncture experiment | | Extrusion test |
|---|---|---|---|---|---|
| | | | Passing rate | Tmax(°C) | |
| Example 1 | 2006 | 26.1 | 9/10 | > 130 | No explosion, no fire |
| Example 2 | 2001 | 25.8 | 10/10 | 101 | No explosion, no fire |
| Example 3 | 1998 | 25.6 | 10/10 | 96 | No explosion, no fire |
| Example 4 | 2011 | 26.3 | 10/10 | 98 | No explosion, no fire |
| Example 5 | 1999 | 25.9 | 10/10 | 106 | No explosion, no fire |
| Example 6 | 2009 | 25.1 | 10/10 | 99 | No explosion, no fire |
| Example 7 | 2007 | 26.4 | 10/10 | 109 | No explosion, no fire |
| Example 8 | 2003 | 25.2 | 10/10 | 103 | No explosion, no fire |
| Example 9 | 1992 | 25.7 | 10/10 | 97 | No explosion, no fire |
| Example 10 | 1993 | 25.9 | 10/10 | 112 | No explosion, no fire |
| Example 11 | 2013 | 26.4 | 10/10 | 95 | No explosion, no fire |
| Example 12 | 1998 | 26.1 | 10/10 | 97 | No explosion, no fire |
| Example 13 | 2014 | 26.8 | 10/10 | 106 | No explosion, no fire |
| Example 14 | 1991 | 26.4 | 10/10 | 111 | No explosion, no fire |
| Comparative Example 1 | 1996 | 21.3 | 2/10 | > 130 | explosion, Catch fire |
| Comparative Example 2 | 2005 | 20.8 | 3/10 | > 130 | No explosion, no fire |

It can be seen from Table 2 that the battery core made by the lithium ion gel electrolyte containing acrylate in the present invention has basically no reduction in the initial discharge capacity compared with the battery core made by the lithium ion liquid electrolyte, and can significantly improve the passing rate of the nail penetration test and extrusion test of the lithium ion battery core. Therefore, the lithium ion gel electrolyte containing acrylate provided by the present invention not only has excellent electrical properties, but also has obvious advantages in mechanical properties such as nail penetration test and extrusion, and solves the major problems faced by current liquid electrolytes. The preferred embodiments of the present invention are described in detail above, but the present invention is not limited thereto. Within the scope of the technical concept of the present invention, a variety of simple modifications can be made to the technical solution of the present invention, including the combination of various technical features in any other suitable manner. These simple modifications and combinations should also be regarded as the disclosed content of the present invention. All belong to the protection scope of the present invention.

## Claims

1. An acrylate, wherein the acrylate is any one or more of the following compounds represented by formula I) and formula II): 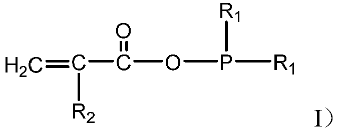 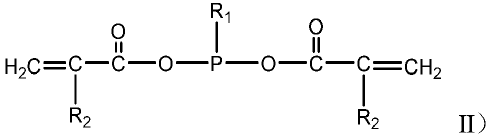 wherein, in formula I) and formula II), R₁ to R₂ each contain carbon atoms of 0-3, preferably each is any one of H, CH₃, C₂H₅, C₃H₇, C₄H₉, C₆H₅, CF₃, CF₃CH₂, CF₂HCH₂, CF₃CF₂, CF₂HCF₂CH₂, OCH₂CF₃, 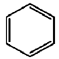 and

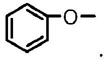

2. The acrylate according to claim 1, wherein the acrylate is one or two or more selected from the group consisting of:

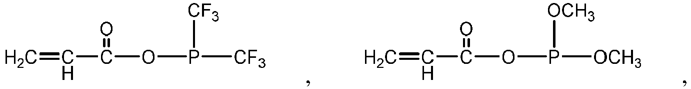

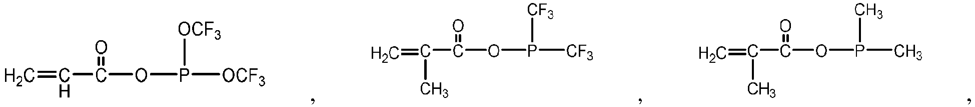

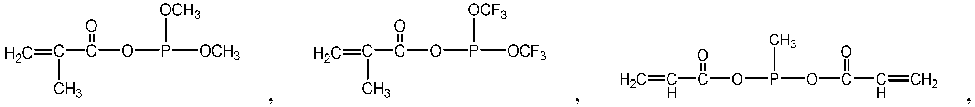

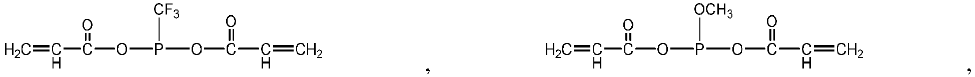

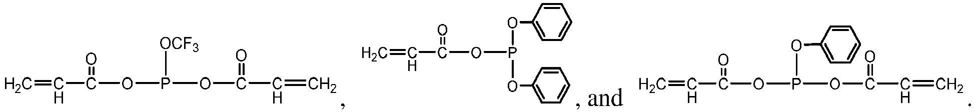

3. A raw material composition of gel electrolyte for a lithium ion secondary battery, wherein the composition contains a non-aqueous organic solvent, an electrolyte lithium salt, and the acrylate according to any one of claims 1-2.

4. The composition according to claim 3, wherein the weight ratio of the non-aqueous organic solvent, the electrolyte lithium salt and the acrylate is 70-90: 10-20: 0.1-10.

5. The composition according to claim 3 or 4, wherein the non-aqueous organic solvent is one or two or more of ethylene carbonate, propylene carbonate, dimethyl carbonate, diethyl carbonate, ethyl methyl carbonate, methyl acetate, ethyl acetate, propyl acetate, butyl acetate, propyl propionate, ethyl propionate, and butyl propionate.

6. The composition according to claim 3 or 4, wherein the electrolyte lithium salt is one or two or more of LiPF₆, LiClO₄, LiBOB, LiBF₄, LiO₂PF₂, LiODFB, LiTFSI, LiFSI, and LiC(CF₃SO₃)₃.

7. A gel electrolyte for a lithium ion secondary battery, which is obtained by mixing and then polymerizing the composition according to any one of claims 3-6 and a thermal initiator.

8. The electrolyte according to claim 7, wherein the weight ratio of the composition to the thermal initiator is 90-100: 0.5.

9. The electrolyte according to claim 7, wherein the thermal initiator is selected from one or two of peroxy compounds and azo compounds.

10. The electrolyte according to claim 7, wherein the polymerization conditions include a temperature of 60-100°C; and a time of 0.5-3 h.

11. The electrolyte according to claim 7, wherein the concentration of the lithium salt in the electrolyte is 0.5-2 mol/L.

12. A lithium ion secondary battery, the battery including a pole core and an electrolyte, wherein the pole core and the electrolyte are sealed in a battery case, the pole core includes a positive electrode sheet, a negative electrode sheet and a separator, and the electrolyte is the electrolyte according to any one of claims 7-11.

13. The battery according to claim 12, wherein the positive electrode sheet includes a positive electrode current collector and a positive electrode active material, a positive electrode binder, and a positive electrode conductive agent for attaching to the positive electrode current collector, preferably, the positive electrode active material is one or two or more of LiFePO₄, LiCoO₂, LiMn₂O₄, LiNi_{0.5}Co_{0.2}Mn_{0.3}O₂, LiNi_{0.5}Mn_{1.5}O₄, LiNiₓCo_{y}Mn_{1-x-y}, and LiNiₓCo_{y}Al_{1-x-y}.

14. The battery according to claim 12, wherein the negative electrode sheet includes a negative electrode current collector and a negative electrode active material, a negative electrode binder, a negative electrode conductive agent, and a thickener for attaching to the negative electrode current collector, preferably, the negative electrode active material is one or two or more of natural graphite, artificial graphite, soft carbon, hard carbon, lithium titanate, silicon, and silicon-carbon alloy.

15. A preparation method for the lithium ion secondary battery according to any one of claims 12-14, wherein the preparation method includes:
(1) an electrolyte lithium salt, a non-aqueous organic solvent and an acrylate are mixed and then a thermal initiator is added to obtain a pre-mixed electrolyte;
(2) the positive electrode sheet, negative electrode sheet and separator are made into a soft-packed battery core, packaged with a polymer, and then vacuum-baked, injected with the premixed electrolyte, sealed and allowed to stand, and then allowed to stand at a constant temperature of 60-100°C for 0.5-3 h to obtain a gel electrolyte, which is cooled and formed, and then the battery is sealed.

16. The preparation method according to claim 15, wherein,
conditions of vacuum baking include: a temperature of 60-120°C, a time of 12-36 h;
and a time of sealing and standing is 12-36 h.
